Europäisches Patentamt

European Patent Office

Office européen des brevets

(11) Publication number: **0 133 013**
**B1**

# (12) EUROPEAN PATENT SPECIFICATION

(45) Date of publication of patent specification: **27.01.88**

(51) Int. Cl.⁴: **G 11 B 15/295**

(21) Application number: **84305026.1**

(22) Date of filing: **24.07.84**

(54) Cassette tape recording and/or reproducing apparatus.

(30) Priority: **30.07.83 JP 140266/83**

(43) Date of publication of application:
**13.02.85 Bulletin 85/07**

(45) Publication of the grant of the patent:
**27.01.88 Bulletin 88/04**

(84) Designated Contracting States:
**AT DE FR GB IT NL**

(56) References cited:
**EP-A-0 031 976**
**DE-A-2 142 874**
**DE-A-3 221 025**
**GB-A-2 075 244**
**US-A-3 779 498**

(73) Proprietor: **SONY CORPORATION**
**7-35 Kitashinagawa 6-Chome Shinagawa-ku**
**Tokyo 141 (JP)**

(72) Inventor: **Ida, Mitsuru c/o Patent Division**
**Sony Corporation 7-35 Kitashinagawa-6**
**Shinagawa-ku Tokyo (JP)**
Inventor: **Shimada, Minoru c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

**Description**

This invention relates to cassette tape recording and/or reproducing apparatus.

Various mechanical arrangements have been proposed for automatically halting the driving of the tape and reels within a cassette upon the full unwinding of the tape from a supply reel to a take-up reel. One such device, for example, as disclosed in detail in our U.S. Patent No. 3,779,498, employs a rotary member which always rotates when the tape is running, for example, as in the normal forward mode, but stops when the tape is fully unwound from the supply reel onto the take-up reel, an elongated shut-off lever or plate which is mounted for rotation about the axis of the rotary member, and a frictional clutch for urging the shut-off lever to turn with the rotary member so long as the rotary member is being rotated. A cam is driven from the motor which rotates the capstan and causes a repeated uniform stroke or reciprocating movement of a pawl member so long as the motor is operated. The pawl member is engageable with teeth on a reciprocating slide which is made to undergo a movement sufficient to change-over from the normal forward mode to the stop mode of the apparatus only when the motor continues to operate while the rotary member is halted, with the result that the frictional clutch no longer angularly urges the shut-off lever to turn.

The above described shut-off device is disadvantageously complicated. For example, the device requires the installation of a frictional ring between the shut-off lever and the associated rotary member, a helical compression spring extending along the axis of the rotary member to urge the shut-off lever and the rotary member towards each other with the frictional ring therebetween, and an annular spring seat extending around the axis of the rotary member for retaining the helical spring thereon. Moreover, this prior shut-off device is disadvantageous in that the frictional ring, helical spring and spring seat or annulus arranged along the axis of the rotary member undesirably increase the dimensions of the device in that direction, and therefore discourage the provision of such a device in portable cassette tape recording and/or reproducing apparatus where miniaturization is generally desirable. Moreover, by reason of the relatively complex construction, assembly is relatively difficult and increases the cost.

According to the present invention there is provided in a cassette tape recording and/or reproducing apparatus having a tape driving member which, in a selected operating mode of the apparatus is rotated for driving the tape in the cassette in the direction for winding the tape onto a take-up reel;

a device for automatically changing the operating mode of the apparatus when the tape is fully wound on the take-up reel, the device comprising:

a rotary member which is rotated when the tape is running and which stops rotating when the tape is fully wound on said take-up reel, said rotary member having a cylindrical actuating portion rotatable coaxially therewith;

mode-change drive means effecting a repeated motion in response to rotation of said tape driving member and being operative only when said rotary member stops rotating;

an angularly-rotatable mode-change lever; and

means for establishing another operating mode of the apparatus;

characterized by:

said mode-change lever having an elongated hole with converging sides in which said cylindrical actuating portion is received so that said mode-change lever is angularly displaceable about the axis of rotation of said rotary member and also longitudinally displaceable in the direction along said elongated hole;

spring means urging said mode-change lever in one direction along said elongated hole for frictionally engaging said converging sides with said actuating portion and thereby frictionally urging said mode-change lever to turn with said rotary member so long as said rotary member is rotated; and

said means for establishing another operating mode of the apparatus operating, in response to said operation of said mode-change drive means, to displace said mode-change lever in the opposite direction along said elongated hole against the force of said spring means only when said rotary member stops rotating and thereby no longer frictionally urges said mode-change lever to turn therewith angularly about said axis.

An embodiment of cassette tape recording and/or reproducing apparatus according to the invention preferably comprises a capstan or tape driving member which, in a selected operating mode of the apparatus, such as the normal forward mode, is rotated for driving the tape in the cassette in the direction for winding the tape onto a take-up reel, and a device for automatically changing the operating mode of the apparatus when the tape is fully wound on the take-up reel. The automatic device comprises a rotary member, such as a pinch roller, which is rotated when the tape is running and which stops rotating when the tape is fully wound on the take-up reel, a mode-change lever having an elongated hole with converging sides in which a cylindrical actuating portion of the pinch roller is received so that the mode-change lever is angularly displaceable about the axis of rotation of the pinch roller and also longitudinally displaceable in the direction along the elongated hole, spring means urging the mode-change lever in one direction along its elongated hole for frictionally engaging the converging sides of the hole with the actuating portion and thereby frictionally urging the mode-change lever to turn with the pinch roller so long as the pinch roller is rotated, means for establishing another operating mode of the apparatus, for example, the stop mode, in response to displacement of the mode-change lever in the opposite direction along its elongated hole against the force of the spring means, and mode-change drive means effecting a repeated motion in response to rotation of the capstan and being operative to displace the mode-change lever in the direction against the force of the spring means only when the pinch roller stops rotating and thereby no longer frictionally urges the mode-change lever to turn therewith about the axis of the pinch roller.

The invention will now be described by way of example with reference to the accompanying drawings, throughout which like parts are referred to by like references, and in which:

Figure 1 is a perspective view of an automatic shut-off device for an embodiment of cassette tape recording and/or reproducing apparatus according to the present invention;

Figure 2 is a top plan view of the automatic shut-off device of Figure 1;

Figure 3 is a sectional view taken along the line III—III in Figure 2, and showing the shut-off device associated with a push-button for establishing a normal forward mode of the apparatus, and with a latch device for maintaining such push-button in its active position;

Figure 4 is a sectional view taken along the line IV—IV in Figure 2;

Figure 5 is an enlarged perspective view similar to that of Figure 1, but with a pinch roller and its supporting arm removed;

Figure 6 is a plan view of the structure appearing on Figure 5;

Figures 7A to 7E are plan views similar to that of Figure 6, but illustrating various phases in the operation of the automatic shut-off device; and

Figures 8A and 8B are plan views similar to those of Figures 7A to 7E, but illustrating the operation of the shut-off device during a rewind or fast-forward mode of operation of the apparatus.

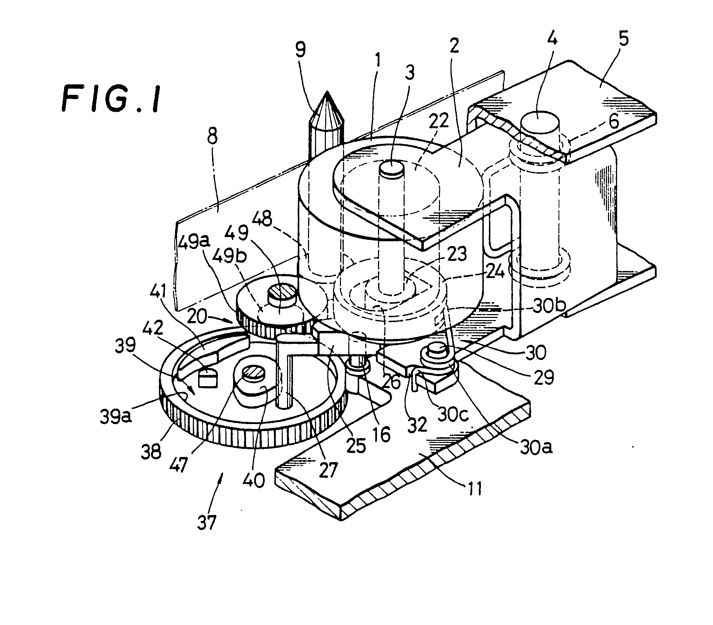

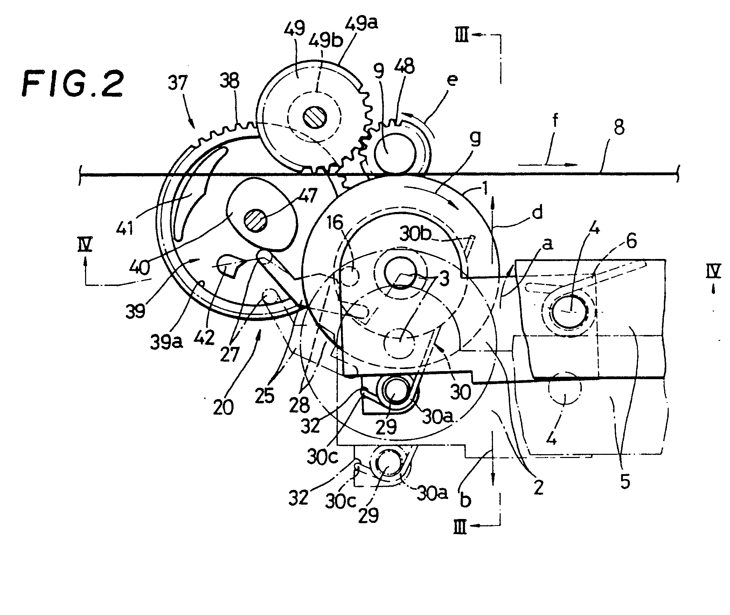

Referring to the drawings in detail, and initially to Figures 1 to 4 thereof, it will be seen that the automatic shut-off device to be described may be incorporated in a portable cassette tape recording and/or reproducing apparatus of the type having a pinch roller 1 rotatably mounted on a support arm 2 by means of an axle 3. The support arm 2 is shown to be pivotally mounted on a post 4 extending from the head base plate 5. The support arm 2 is acted on by a torsion spring 6 so as to be angularly urged about the post 4 in the direction of the arrow a in Figure 2.

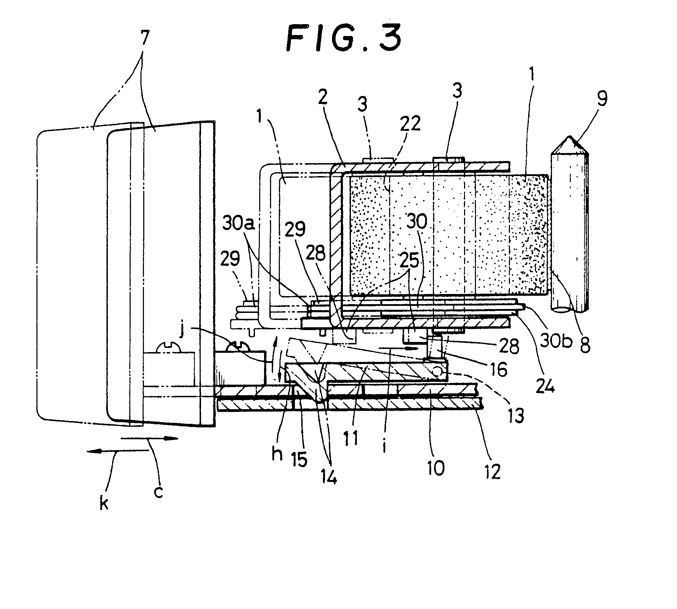

In a stop mode of the recording and/or reproducing apparatus, a push-button 7 is in its inactive or extended position shown in dot-dash lines in Figure 3 and, as a result thereof, the head base plate 5 is moved backward in the direction of the arrow b in Figure 2 by a return spring (not shown). Further, in the stop mode, the pinch roller 1 is moved with the head base plate 5 to its inoperative position shown in dot-dash lines in Figures 2 and 3, and in which the pinch roller 1 is withdrawn from a tape cassette (not shown) installed in the apparatus. When the push-button 7 is manually depressed in the direction of the arrow c in Figure 3 to its active position shown in full lines for establishing a normal forward mode of the apparatus, for example, for a recording or reproducing operation thereof, the head base plate 5 and the pinch roller 1 on the support arm 2 are correspondingly moved in the direction of the arrow d in Figure 2. As a result of this, the pinch roller 1 is inserted into the operatively positioned tape cassette (not shown) and urges a magnetic tape 8 in the cassette against a capstan 9 with a constant pressure determined by the torsion spring 6. In the normal forward mode, the capstan 9 is rotated by the usual motor (not shown) in the direction of the arrow e in Figure 2 with the result that the tape 8 is driven at a constant speed in the direction of the arrow f, and the pinch roller 1 is rotated in the direction of the arrow g in response to the movement of the tape 8.

In order to maintain the apparatus in its normal forward mode, the push-button 7 is shown to be mounted on a slide 10 (Figure 3) which is longitudinally movable on a chassis 12 under a latch plate 11 which is pivotally mounted at 13 on the chassis 12. The latch plate 11 is shown to be formed with a downwardly struck latch nose 14 engageable, when the push-button 7 is depressed to its active position, in a slot or keeper 15 formed in the slide 10. Thus, after the push-button 7 has been depressed to its active position shown in full lines in Figure 3 for establishing the normal forward mode of the associated recording and/or reproducing apparatus, the latch plate 11 is urged downwardly in the direction of the arrow h, for example, by a suitable spring (not shown), to engage the nose 14 in the keeper 15 and thereby lock the push-button 7 in its active position for maintaining the normal forward mode of operation.

A pin or abutment 16 extends upwardly from the latch plate 11 near the pivoting axis of the latter and an automatic shut-off device 20 is operative, when the tape 8 is fully unwound from the supply reel onto the take-up reel with the apparatus in its normal forward mode, for example, during a recording or reproducing operation, to act in the direction of the arrow j in Figure 3 against the abutment 16 for upwardly tilting the latch plate 11 in the direction of the arrow j. When the latch plate 11 is thus upwardly tilted, the nose 14 is removed from the keeper 15 with the result that the slide 10 and the push-button 7 are free to be returned in the direction of the arrow k to the inactive position shown in dot-dash lines in Figure 3, for example, by a suitable spring (not shown) associated therewith. Such return movement of the slide 10 and the push-button 7 to the inactive position is effective to restore the head base plate 5 in the direction of the arrow b in Figure 2 to the inoperative position shown in dot-dash lines with the result that the pinch roller 1 is separated from the capstan 9 for automatically establishing the stop mode of the apparatus.

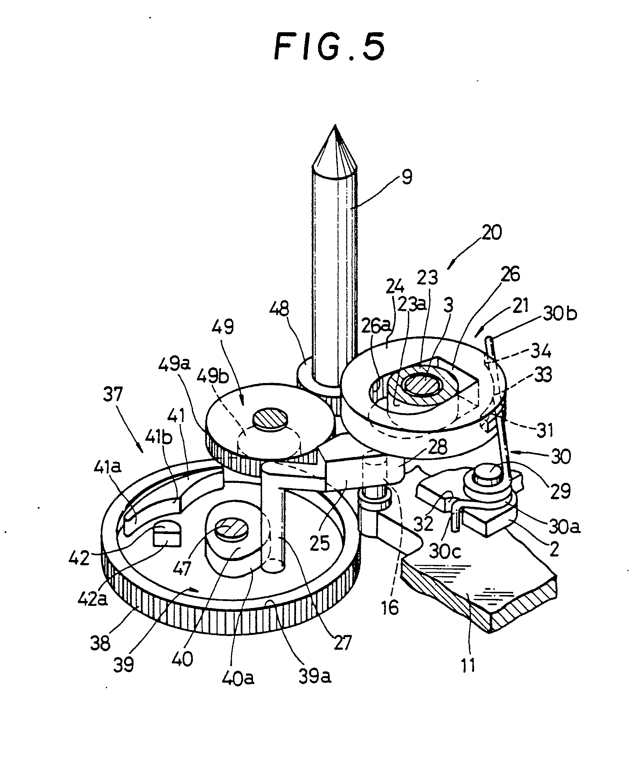

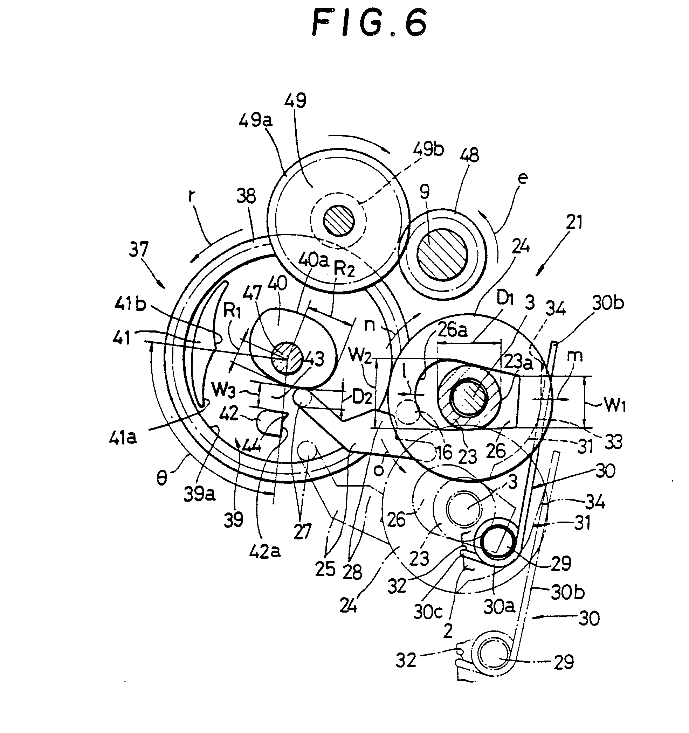

The shut-off device 20 is shown to generally comprise a mode-change lever 21 which is mounted for both angular displacements about, and longitudinal displacements relative to the axis P of the pinch roller 1. More particularly, the pinch roller 1 is desirably in the form of a rubber sleeve fixed on a rigid core or hub 22 of synthetic resin which is rotatable on the axle 3. The lower end of the hub 22 is formed with a reduced diameter extension forming an actuating portion 23 having a cylindrical outer surface 23a. As shown particularly in Figures 5 and 6, the mode-change lever 21, which is also preferably moulded of a suitably rigid synthetic resin, includes a disc-shaped portion 24 at one end having an arm portion 25 extending laterally from its underside. The disc-shaped portion 24 of the mode-change lever 21 has an elongated slot 26 extending therethrough and formed with side walls which converge in the direction generally away from that in which the arm portion 25 extends from the disc-shaped portion 24. The minimum distance $W_1$ and the maximum distance $W_2$ between the converging side walls of the slot 26 are determined according to the following relationships:

$W_1$ is less than $D_1$ and $W_2$ is greater than $D_1$

($D_1$ being the diameter of the cylindrical outer surface 23a of the actuating portion 23). Moreover, the slot 26 has a semicircular wall portion 26a at the end of the slot 26 corresponding to the maximum distance between its converging side walls. At the free end of the arm portion 25 of the mode-change lever 21 there is a depending or cam following pin 27. Further, the arm portion 25, at the region thereof adjacent to the disc-shaped portion 24, defines a step 28 located below the disc-shaped portion 24 and being normally spaced from upstanding abutment 16 on the latch plate 11. The step 28 acts against the abutment 16 in a shut-off operation of the shut-off device 20, as hereinafter described in detail.

It will be appreciated that, by reason of the reception of the actuating portion 23 of the pinch roller hub 22 in the slot 26 of the mode-change lever 21, the mode-change lever 21 is longitudinally displaceable in the directions of the arrows l and m in Figure 6, that is, in directions along the slot 26, in a plane perpendicular to the axis P of rotation of the pinch roller 1, and is also angularly displaceable about the axis P in the directions indicated by the arrows n and o in Figure 6.

The shut-off device 20 further comprises a torsion spring 30 having a coil portion 30a mounted on a post 29 extending from the support arm 2. As shown particularly in Figure 5, the spring 30 further has an elongated straight arm 30b extending from one end of the coil portion 30a and engaged in a groove 31 of substantially U-shaped cross-section formed in the peripheral surface of the disc-shaped portion 24 of the mode-change lever 21. The other end portion 30c of the spring 30 is bent or hooked, as shown particularly in Figure 5, and engages in a recess 32 formed in an edge of the support arm 2. As shown particularly in Figure 6, the groove 31 includes an arcuate portion 33 which is substantially concentric with the centre of the disc-shaped portion 24 of the mode-change lever 21, and a straight end portion 34. It will be appreciated that, when the spring arm 30b acts against the bottom of the groove 31 at the arcuate portion 33 thereof, the spring arm 30b is tangential to the engaged arcuate portion 33 of the groove 31 and thus exerts a force on the mode-change lever 21 along a line extending through the axis P of the pinch roller 1, with the result that the spring arm 30b urges the mode-change lever 21 in the direction l along the slot 26, that is, in the direction for frictionally engaging the converging sides of the slot 26 with the actuating portion 23 of the pinch roller 1 so as frictionally to urge the mode-change lever 21 to turn with the pinch roller 1 in the direction of the arrow n in Figure 6 so long as the pinch roller 1 is rotated. However, when the mode-change lever 21 is turned about the actuating portion 23 of the pinch roller 1 to the position shown in dot-dash lines in Figure 6, as hereinafter described in detail, the straight end portion 34 of the groove 31 is engaged, at an angle, by the spring arm 30b so that the spring arm 30b acts on the mode-change lever 21 along a line of force offset from the axis P of the pinch roller 1 with the result that the spring arm 30b then also urges the mode-change lever 21 angularly about the axis P in the counter-clokewise direction, as viewed in Figure 6.

The shut-off device 20 is further shown, particularly in Figures 1 and 5, to compare a mode-change drive means 37 which includes a relatively large-diameter gear 38 preferably moulded of a synthetic resin, and which is formed with a substantially circular recess 39 in its upper surface. The recess 39 has moulded therein, as integral parts of the gear 38, an inner cam 40 and an outer cam 41 providing respective cam surfaces 40a and 41a which are alternatively engageable by the cam following pin 27 depending from the mode-change lever 21. A drive projection 42 is also formed in the recess 39 at a radial distance from the centre of the gear 38 intermediate the distances from that centre to the surfaces of the cams 40 and 41 so as to be engageable with the cam following pin 27, as hereinafter described in detail. More particularly, the cam 40 is shown in Figure 6 to be a radial cam having an eccentric peripheral cam surface 40a which varies between a minimum radius $R_1$ and a maximum radius $R_2$ from the axis of a shaft 47 on which the gear 38 is rotatable. On the other hand, the outer cam 41 is disposed adjacent to the peripheral wall surface 39a of the recess 39 and defines the cam surface 41a facing inwardly and leading to a central cusp 41b directed towards the shaft 47. As shown particularly in Figure 6, the portion of the inner cam surface 40a of maximum radius $R_2$ for deflecting the cam following pin 27 radially outward from the shaft 47, and the cusp 41b of the outer cam surface 41a for deflecting the cam following pin 27 radially inward towards the shaft 47 are angularly displaced, in opposite directions, from the drive projection 42 with an angle $\theta$ between the drive projection 42 and the cusp 41$b$ preferably being about 90°. Moreover, each of the cam surface 40$a$ and 41$a$ is operative, when engaged with the cam following pin 27, to deflect it to a position in the path of the drive projection 42.

More particularly, the drive projection 42 is shown to be angularly disposed near a portion of the inner cam surface 40$a$ which has the minimum radius $R_1$ with a gap or path 43 being defined therebetween having a width $W_3$ greater than the diameter $D_2$ of the cam following pin 27. Further, an operative surface 42$a$ of the drive projection 42, that is, the surface facing in the direction of rotation of the gear 38 indicated by the arrow $r$ in Figure 6, has its inner edge at a distance from the axis of the shaft 47 equal to the radius $R_2$, and its outer edge at a distance from the axis of the shaft 47 equal to the radial distance from the cusp 41$b$ of the outer cam surface 41$a$ to the axis of the shaft 47. The operative surface 42$a$ of the drive projection 42 is, for the most part, in a plane extending radially with respect to the axis of the shaft 47 but has a radially inward end portion 44 which is inclined from such radial plane in the direction $r$ in which the gear 38 is rotated.

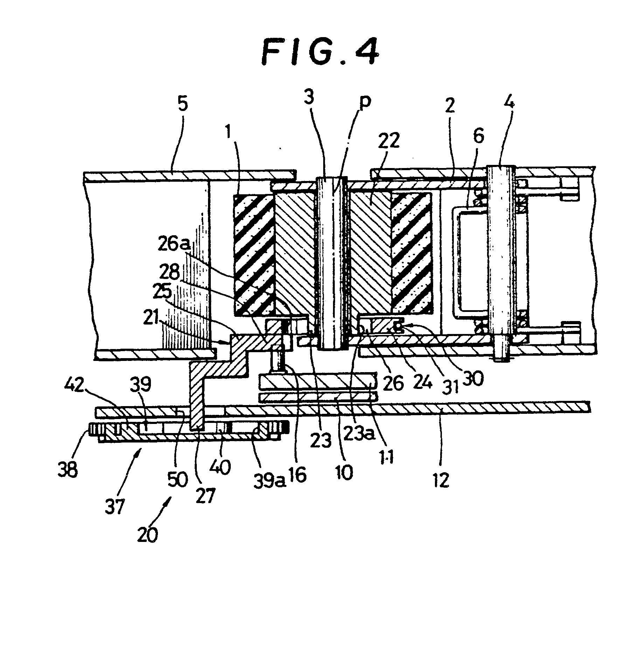

As shown particularly in Figure 4, the gear 38 is rotatably mounted on the shaft 47 beneath the chassis 12 which has an opening 50 through which the lower end portion of the cam following pin 27 extends downwardly into the recess 39. As shown in Figures 1 and 5, a drive gear 48 fixed relative to the capstan 9 for rotation therewith is disposed below the chassis 12 for driving the gear 38 by means of an intermediate gear member 49 having a relatively large gear 49$a$ meshing with the drive gear 48, and an integral small diameter gear 49$a$ meshing with the gear 38. Therefore, when the capstan 9 is rotated in the direction of the arrow $e$ in Figure 6 by operation of the associated drive motor, the gear 38 is continuously rotated at a constant relatively low speed in the direction of the arrow $r$.

The above-described shut-off device 20 operates as follows:

When the push-button 7 is depressed in the direction of the arrow $c$ in Figure 3 to the active position shown in full lines for establishing the normal forward mode of the apparatus, for example, for a recording or reproducing operation, the nose 14 on the latch plate 11 engages in the keeper 15 of the slide 10 for locking the push-button 7 in its active position, and the head base plate 5 is moved with the slide 10 in the direction of the arrow $d$ in Figure 2 so as similarly to move the support arm 2 to the position shown in full lines in which the pinch roller 1 is in its operative position. In such operative position, the pinch roller 1 extends into a tape cassette and presses the tape 8 therein against the rotating capstan 9 with a constant pressure determined by the torsion spring 6 acting on the support arm 2. Consequently, in the normal forward mode, the tape 8 is driven at a constant speed in the direction of the arrow $f$ in Figure 2 in response to the rotation of the capstan 9, and such movement of the tape 8 rotates the pinch roller 1 in the direction of the arrow $g$.

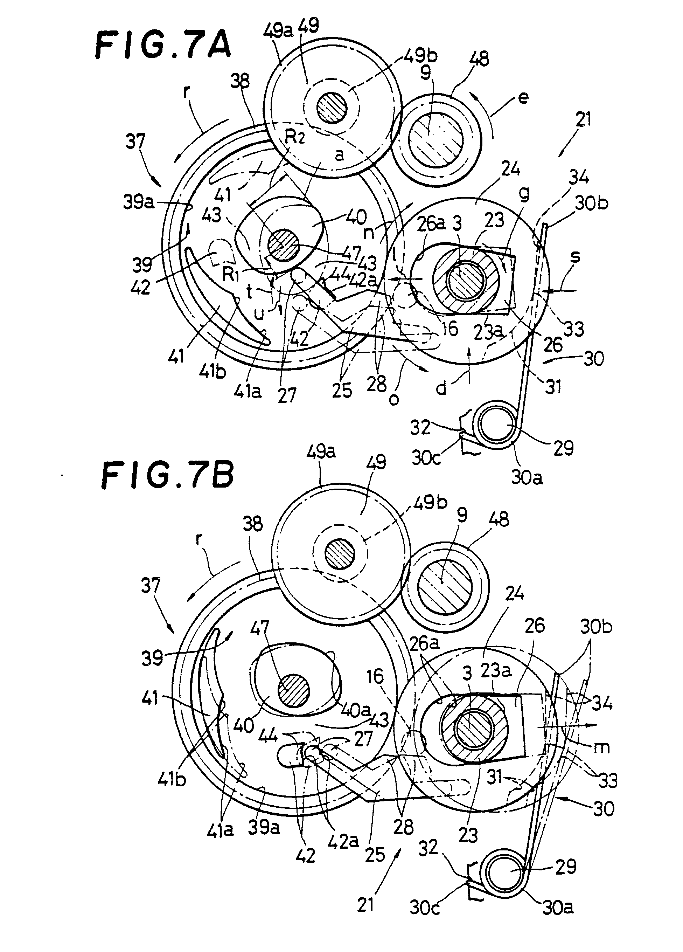

The movement of the pinch roller 1 to its operative position in the normal forward mode of the apparatus similarly moves the mode-change lever 21 in the direction of the arrow $d$ in Figure 2 so as to dispose the mode-change lever 21 in its operative position shown in Figure 7A. In such operative position of the mode-change lever 21, the spring arm 30$b$ acts on the arcuate portion 33 of the groove 31 along the line of force indicated by the arrow $s$, with the result that the mode-change lever 21 is urged longitudinally in the direction of the arrow $l$ for engaging the converging sides of the slot 26 with the cylindrical peripheral surface 23$a$ of the actuating portion 23 of the pinch-roller hub. So long as the tape 8 is advanced or moved in the direction of the arrow $f$ in Figure 2 in response to the rotation of the capstan 9, the corresponding rotation of the pinch roller 1 in the direction of the arrow $g$ in Figures 2 and 7A causes corresponding rotation of the actuating portion 23 of the pinch-roller hub. By reason of the frictional engagement of the converging sides of the slot 26 with the outer surface 23$a$ of the actuating portion 23, the mode-change lever 21 is urged to turn in the direction of the arrow $n$ in Figure 7A about the axis P of the pinch roller 1, with the result that cam following pin 27 is urged in the direction of the arrow $t$ against the inner cam surface 40$a$. Further, the gear 38 is rotated in the direction of the arrow $r$ in response to the rotation of the capstan 9 and, due to the eccentric configuration of the inner cam surface 40$a$, during each revolution of the gear (38), the cam following pin 27 of the mode-change lever 21 is oscillated between the positions shown in full lines and in dot-dash lines, respectively. So long as the pinch roller 1 continues to rotate with the apparatus in its normal forward mode, the frictional engagement of the converging sides of the slot 26 with the actuating portion 23 of the pinch-roller hub will continue to urge the cam following pin 27 against the inner cam surface 40$a$. Therefore, after each movement of the cam following pin 27 in the direction of the arrow $u$ in Figure 7A in response to engagement with a large radius portion of the inner cam 40, the cam following pin 27 will return to the direction of the arrow $t$ when engaging with the small radius portion of the inner cam 40, and thus will pass through the gap 43 between the inner cam 40 and the drive projection 42, as shown in full lines in Figure 7A. In other words, so long as the pinch roller 1 continues to rotate with the apparatus in its normal forward mode, the cam following pin 27 will continuously engage the inner cam surface 40$a$ and will not be engaged by the drive projection 42.

However, when the tape 8 in a cassette is fully unwound from the supply reel and wound onto the take-up reel, the tape 8 stops running or moving even although the apparatus remains in its normal forward mode and the rotation of the capstan 9 by its associated motor is continued. When the tape 8 stops moving or running, the pinch roller 1 in contact therewith stops rotating and, in response thereto, the shut-off device 20 effects a shut-off or mode-change operation during the following revolution of the gear 38.

Shut-Off Operation

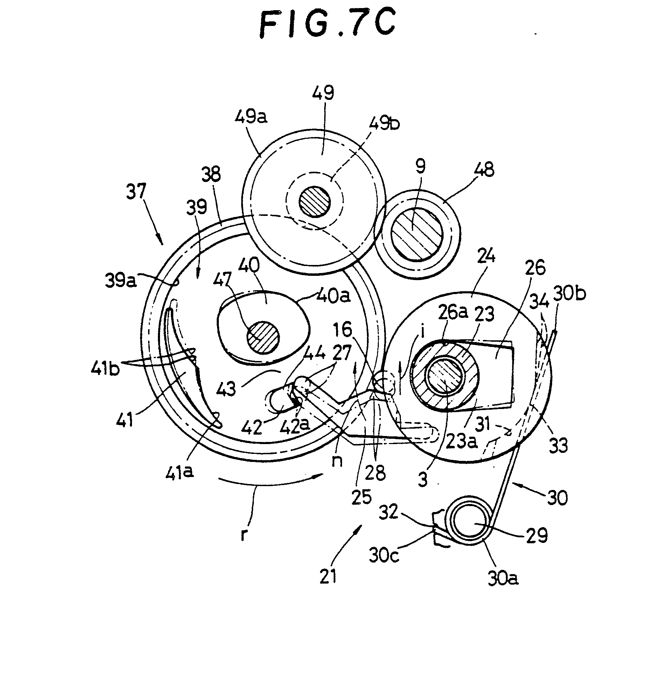

As soon as the pinch roller 1 stops rotating, the frictionally applied force for urging the mode-change lever 21 to turn in the direction of the arrow *n* about the axis P of the pinch roller 1 is removed from the mode-change lever 21. Therefore, when, in response to the continued turning of the gear 38, the large radius portion of the inner cam 40 moves the cam following pin 27 in the direction of the arrow *u* in Figure 7A to the position shown in dot-dash lines, the cam following pin 27 remains in such position so as to be engageable by the operative surface 42*a* of the drive projection 42, as shown in Figure 7B. In response to the continued rotation of the gear 38 in the direction of the arrow *r* with the drive projection 42 in engagement with the cam following pin 27, the mode-change lever 21 is longitudinally displaced in the direction of the arrow *m* (Figure 7B) against the force of the spring arm 30*b*. The engagement of the semicircular wall surface 26*a* of the slot 26 with the outer surface 23*a* of the hub 23 limits such longitudinal movement of the mode-change lever 21 in the direction *m* to a position in which the step 28 on the arm portion 25 of the mode-change lever 21 confronts the abutment 16 directed upwardly from the latch plate 11. With further longitudinal movement of the mode-change lever 21 in the direction of the arrow *m* in Figure 7B prevented by the engagement of the wall portion 26*a* with the outer surface 23*a*, additional turning of the gear 38 in the direction of the arrow *r* effects angular displacement of the mode-change lever 21 about the axis P of the pinch roller axle 3, for example, from the position shown in dot-dash lines to the position shown in full lines in Figure 7C. During such angular displacement of the mode-change lever 21, the step 28 displaces the abutment 16 in the direction of the arrow *j* and thereby causes upward pivoting of the latch plate 11 for releasing the nose 14 from the keeper 15 and thereby permitting return of the push-button 7 to its inactive position for establishing the stop mode of the apparatus, as previously described with reference to Figure 3. It will be appreciated that, during the angular displacement of the mode-change lever 21 by the drive projection 42, as described above with reference to Figure 7C, the inclined end portion 44 of the operative surface 42*a* on the drive projection 42 ensures that the cam following pin 27 will not slip or become inadvertently disengaged from the surface 42*a*.

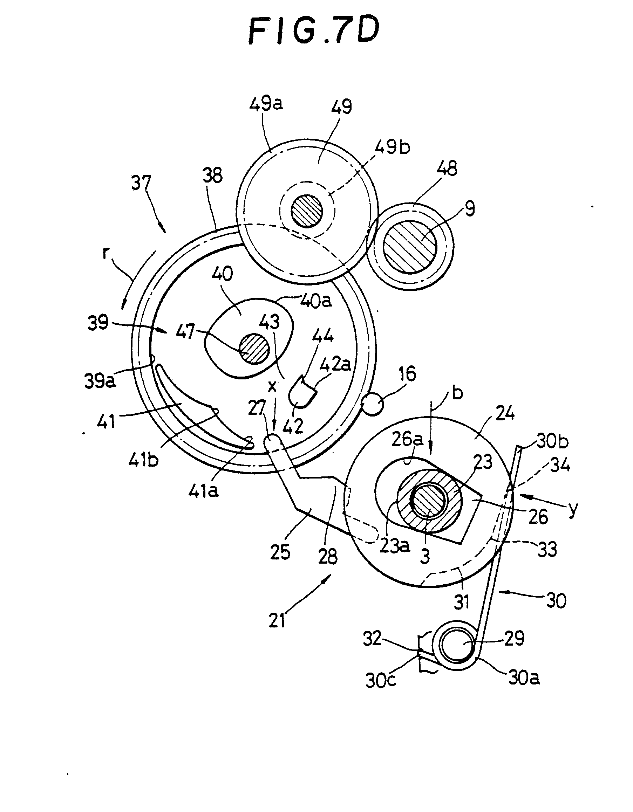

Of course, upon the establishment of the stop mode of the apparatus, the pinch roller 1 is moved to its inoperative position shown in dot-dash lines in Figure 2 with the result that the mode-change lever 21 is similarly moved in the direction of the arrow *b* to its inoperative position shown in Figure 7D. In response to such movement of the mode-change lever 21 to its inoperative position, the cam following pin 27 is disengaged from the operative surface 42*a* of the drive projection 42 and is urged in the direction of the arrow *x* against the peripheral wall surface 39*a* of the recess 39. Such pressure of the cam following pin 27 against the peripheral wall surface 39*a* results from the fact that, in the inoperative position of the mode-change lever 21, the spring arm 30*b* acts upon the disc-shaped portion 24 of the mode-change lever 21 at the end of the straight end portion 34 of the groove 31 to apply a spring force to the mode-change lever 21 in the direction of the arrow *y* which is offset with respect to the axis P of the pinch roller 1. Thus, the spring force acting in the direction of the arrow *y* tends to turn the mode-change lever 21 in the counter-clockwise direction about the hub 23, as viewed in Figure 7D.

Attempt to Re-Establish Normal Forward Mode After Shut-Off Operation

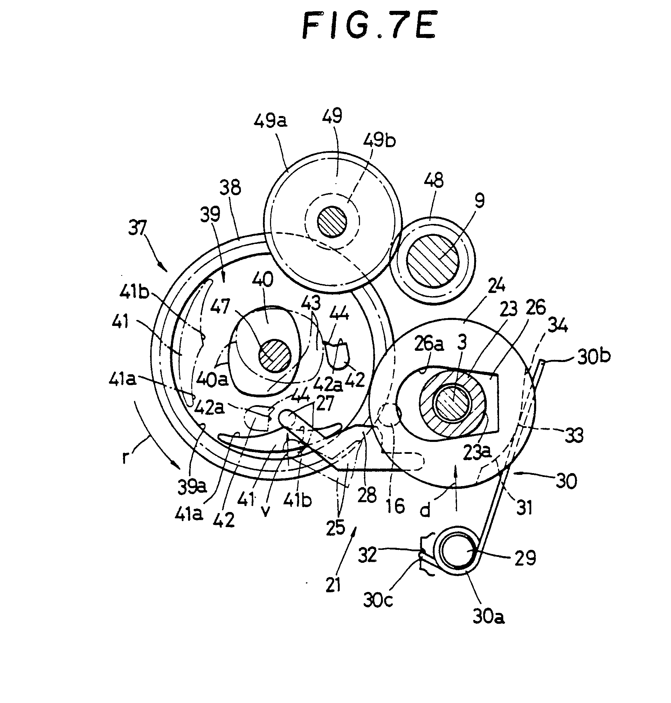

In the event that the push-button 7 is manually depressed to its active position after a shut-off operation by the shut-off device 20, the pinch roller 1 is moved to its operative position but cannot be rotated because the tape 8 is already fully unwound from the supply reel onto the take-up reel and, hence, cannot be moved or advanced by the rotating capstan 9. On the other hand, the rotating capstan 9 does cause turning of the gear 38 in the direction of the arrow *r* and, as a result thereof, the cam following pin 27 of the mode-change lever 21 is engaged by the outer cam surface 41*a* and moved thereby in the direction of the arrow *v* (Figure 7E) so as to be moved into the path of the drive projection 42. Since the pinch roller 1 and the mode-change lever 21 are in their operative positions, the spring arm 30*b* acts against the arcuate portion 33 of the groove 31 so as to apply the spring force in a direction passing through the axis P of the pinch roller 1 about which the mode-change lever 21 is angularly displaceable. Accordingly, in the condition illustrated in Figure 7E, neither the force of the torsion spring 30 nor the rotation of the pinch roller 1 urges the mode-change lever 21 angularly about the pinch roller axis P with the result that the cam following pin 27 remains in the position shown in full lines, that is, in the path of the drive projection 42, as the gear 38 continues to turn in the direction of the arrow *r*. Eventually, the drive projection 42 comes into contact with the cam following pin 27 which remains in its path and the shut-off operation described above with reference to Figures 7C and 7D is repeated.

Fast-Forward or Rewind Mode of the Apparatus

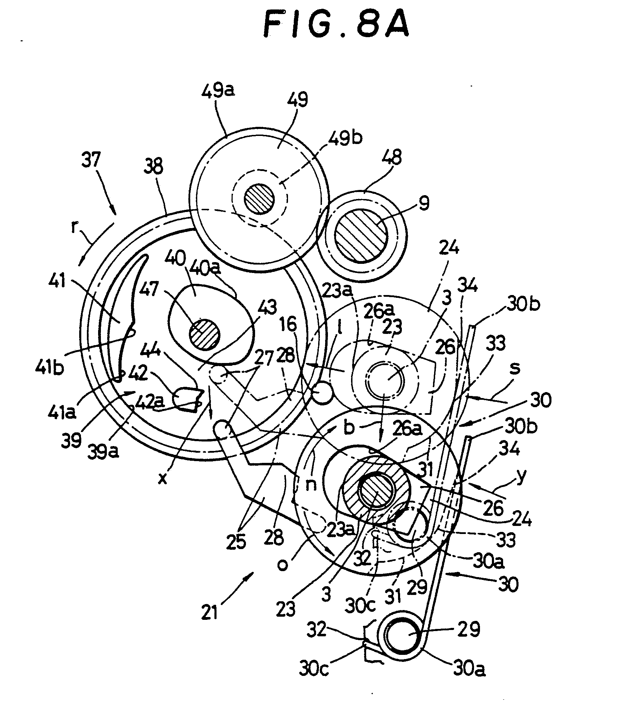

It is to be noted that the shut-off device 20 ensures that the cam following pin 27 of the mode-change lever 21 will not be engaged by the drive projection 42 in either a fast-forward or rewind mode of the apparatus. More particularly, and with reference to Figure 8A, it is noted again that, in the normal forward mode of the apparatus, the mode-change lever 21 is moved to its operative position indicated in dot-dash lines and at which the spring arm 30b acts against the arcuate portion 33 of the groove 31 in the direction of the arrow s so as to urge the mode-change lever 21 only in the direction along the slot 26 indicated by the arrow l. On the other hand, in the fast-forward or rewind mode of the apparatus, as in the stop mode thereof, the mode-change lever 21 is moved to, or remains in its inoperative position shown in full lines in Figure 8A. In such inoperation position of the mode-change lever 21, the engagement of the cam following pin 27 with the peripheral wall surface 39a of the recess 39 causes turning of the mode-change lever 21 in the direction of the arrow n about the axis of the pinch roller 1 defined by the axle 3 so that the straight end portion 34 of the groove 31 is engaged by the spring arm 30b. As a result of such engagement, the spring arm 30b acts against the mode-change lever 21 along the line of force indicated by the arrow y which is offset from the axle 3 and thus urges the mode-change lever 21 to turn in the counter-clockwise direction to press the cam following pin 27 against the peripheral wall surface 39a, as indicated by the arrow x.

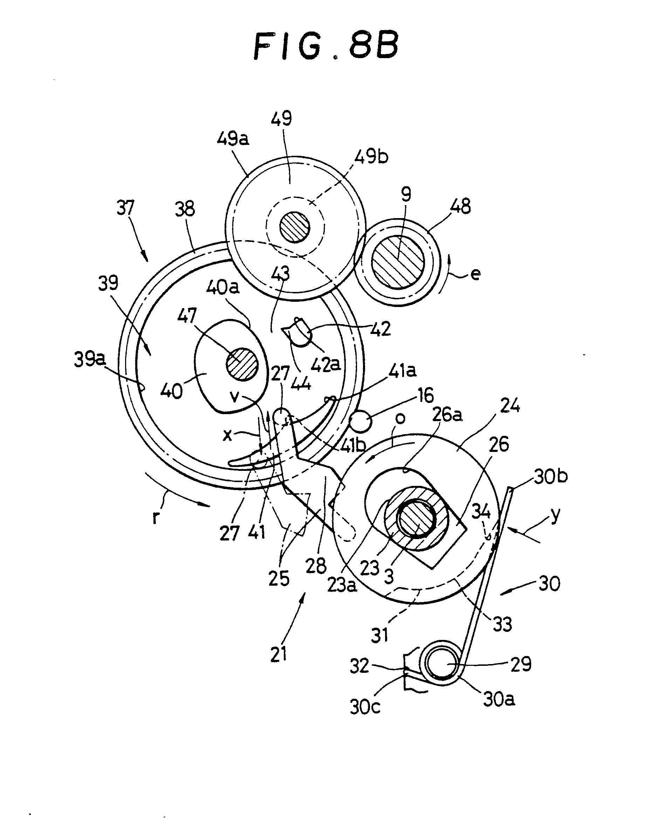

In the fast-forward or rewind mode, the gear 38 continues to rotate in the direction of the arrow r in response to the rotation of the capstan 9 in the direction of arrow e. During each revolution of the gear 38, the outer cam surface 41a acts on the cam following pin 27 to move it in the direction of the arrow v to the position shown in full lines in Figure 8B upon the engagement of the cusp 41b with the cam following pin 27. However, as the cusp 41b of the outer cam surface 41a moves past the cam following pin 27, the cam following pin 27 does not remain in the position shown in full lines in Figures 8B, that is, in the path of the drive projection 42, but rather is urged to return to the position shown in dot-dash lines against the peripheral wall surface 39a by the action of the spring arm 30a against the mode-change lever 21 at the position of the arrow y. Accordingly, in either the fast-forward mode or the rewind mode, the cam following pin 27 of the mode-change lever 21 is never engaged by the drive projection 42, with the result that operation of the shut-off device 20 is prevented.

Although the shut-off device 20 has been shown and described as effecting automatic change of the apparatus from a normal forward mode to the stop mode, it will be appreciated that the present invention has many other applications. Thus, for example, although the movements of the mode-change lever 21 shown in Figures 7B and 7C have been described as being operable to release the latch by which push-button 7 is retained in its active position, thereby effecting change-over of the apparatus from its normal forward mode to a stop mode, such movement of the mode-change lever 21 could be similarly employed for changing the direction in which the tape 8 is driven, when the tape 8 is fully unwound from the supply reel and wound onto the take-up reel. Further, in the described embodiment of the invention, the pinch roller 1 has been employed as the rotary member which rotates when the tape 8 is running and which stops when the tape 8 is fully wound on the take-up reel, and to which the mode-change lever 21 is frictionally coupled at the converging sides of the slot 26. However, the mode-change lever 21 may be frictionally coupled to a rotary member other than the pinch roller 1.

**Claims**

1. A cassette tape recording and/or reproducing apparatus having a tape driving member (9) which, in a selected operating mode of the apparatus, is rotated for driving the tape (8) in the cassette in the direction for winding the tape (8) onto a take-up reel, and having

a device (20) for automatically changing the operating mode of the apparatus when the tape (8) is fully wound on the take-up reel, the device (20) comprising:

a rotary member (1) which is rotated when the tape (8) is running and which stops rotating when the tape (8) is fully wound on said take-up reel, said rotary member (1) having a cylindrical actuating portion (23) rotatable coaxially therewith;

mode-change drive means (37) effecting a repeated motion in response to rotation of said tape driving member (9) and being operative only when said rotary member (1) stops rotating;

an angularly-rotatable mode-change lever (21); and

means (11) for establishing another operating mode of the apparatus;

characterized by:

said mode-change lever (21) having an elongated hole (26) with converging sides in which said cylindrical actuating portion (23) is received so that said mode-change lever (21) is angularly displaceable about the axis of rotation of said rotary member (1) and also longitudinally displaceable in the direction along said elongated hole (26);

spring means (30) urging said mode-change lever (21) in one direction along said elongated hole (26) for frictionally engaging said converging sides with said actuating portion (23) and thereby frictionally urging said mode-change lever (21) to turn with said rotary member (1) so long as said rotary member (1) is rotated; and

said means (11) for establishing another operating mode of the apparatus operating, in response to said operation of said mode-change drive means (37), to displace said mode-change lever (21) in the opposite direction along said elongated hole (26) against the force of said spring means (30) only when said rotary member (1) stops rotating and thereby no longer frictionally urges said mode-change lever (21) to turn therewith angularly about said axis.

2. Apparatus according to claim 1 wherein said tape driving member is a motor-driven capstan (9), said rotary member is a pinch roller (1) movable between operative and inoperative positions with respect to said capstan (9), and said mode-change lever (21) is moved to an inoperative position in response to movement of said pinch roller (1) to said inoperative position.

3. Apparatus according to claim 2 wherein said spring means includes a spring arm (30b) which, in said operative position of said pinch roller (1), acts on said mode-change lever (21) along a line of force extending through said axis about which said mode-change lever (21) is angularly displaceable so that said spring arm (30b) then urges said mode-change lever (21) only in said one direction along said elongated hole (26) and, in said inoperative position of said mode-change lever (21), said spring arm (30b) acts thereon along a line of force offset from said axis for also urging said mode-change lever (21) angularly about said axis.

4. Apparatus according to claim 3 wherein said mode-change drive means (37) includes a rotatable cam member having inner and outer cam surfaces (40a, 41a) alternatively engageable with a cam following portion (27) of said mode-change lever (21) extending therebetween, and a drive projection (42) between said cam surfaces (40a, 41a) engageable with said cam following portion (27) of said mode-change lever (21) in said opposite direction when neither said spring arm (30b) nor said rotary member (1) urges said mode-change lever (21) angularly about said axis, and wherein, in said inoperative position of said mode-change lever (21), said spring arm (30b) urges said mode-change lever (21) angularly about said axis in the direction urging said cam following portion 27 against said outer cam surface (41a) and, when said pinch roller (1) is rotated in said operative position thereof, said actuating portion (23) frictionally urges said mode-change lever (21) angularly about said axis in the direction urging said cam following portion (27) against said inner cam surface (40a).

5. Apparatus according to claim 4 wherein said mode-change lever (21) has an end portion remote from said cam following portion (27) and formed with a groove (31) receiving said spring arm (30b), said groove (31) having an arcuate portion (33) substantially concentric with said axis when said actuating portion (23) frictionally engages the sides of said elongated hole (26) and which is tangentially engaged by said spring arm (30b) when said pinch roller (1) is in said operative position thereof, said groove (31) further having a straight end portion (34) engaged at an angle by said spring arm (30b) when said pinch roller (1) is in said inoperative position.

**Patentansprüche**

1. Kassettenbandgerät zur Aufzeichnung und/oder Wiedergabe, mit einem Bandantriebselement (9), welches in einer ausgewählten Betriebsart des Geräts zum Antreiben des Bandes (8) in der Kassette in der Richtung zum Aufwickeln des Bandes (8) auf eine Aufnahmespule gedreht wird, und einer Einrichtung (20) zum automatischen Ändern der Betriebsart des Geräts, wenn das Band vollständig auf die Aufnahmespule aufgewickelt ist, hat, welche Einrichtung (20)

— ein Drehteil (1), das gedreht wird, wenn das Band (8) bewegt wird, und das die Drehung anhält, wenn das Band (8) vollständig auf die Aufnahmespule aufgewickelt ist, welches Drehteil (1) einen zylindrischen Betätigungsabschnitt (23) aufweist, der koaxial mit dem Drehteil (1) drehbar ist,

— ein Betriebsart-Änderungsantriebsmittel (37), das eine wiederholte Bewegung in Reaktion auf die Drehung des Bandantriebselements (9) bewirkt und betätigbar ist, wenn das Drehteil (1) die Drehung anhält,

— einen um einen Winkel verdrehbaren Betriebsart-Änderungshebel (21) und

— ein Mittel (11) zum Einstellen einer anderen Betriebsart des Geräts hat,
gekennzeichnet durch

— die Tatsache, daß der Betriebsart-Änderungshebel (21) ein längliches Loch (26) mit zusammenlaufenden Seiten hat, von dem der zylindrische Betätigungsabschnitt (23) aufgenommen wird, so daß der Betriebsart-Änderungshebel (21) winkelmäßig um die Drehachse des Drehteils (1) und außerdem longitudinal in Richtung längs des länglichen Lochs (26) auslenkbar ist,

— eine Feder (30), die den Betriebsart-Änderungshebel (21) in einer Richtung längs des länglichen Lochs (26) zum Zwecke eines Reibungseingriffs der zusammenlaufenden Seiten mit dem Betätigungsabschnitt (23) drückt und dadurch den Betriebsart-Änderungshebel (21) mittels Reibung zwingt, sich mit dem Drehteile (1) zu drehen, solange das Drehteil (1) gedreht wird, und

die Tatsache, daß das Mittel (11) zum Einstellen einer anderen Betriebsart in Reaktion auf die Betätigung des Betriebsart-Änderungsantriebsmittels (37) arbeitet, um den Betriebsart-Änderungshebel (21) in der entgegengesetzten Richtung längs des länglichen Lochs (26) gegen die Kraft der Feder (30) nur dann auszulenken, wenn das Drehteil (1) seine Drehung anhält, und dadurch den Betriebsart-Änderungshebel (21) nicht länger mittels Reibung zwingt, sich mit dem Drehteil um einen Winkel um die Achse zu drehen.

2. Gerät nach Anspruch 1, bei dem das Bandtriebsmittel eine motorgetriebene Bandantriebsachse (9) ist, das Drehteil eine Andruckrolle (1) ist, die zwischen wirksamen und nichtwirksamen Positionen in bezug auf die Bandantriebsachse (9) bewegbar ist, und der Betriebsart-Änderungshebel (21) in Reaktion auf die Bewegung der Andruckrolle (1) in die nichtwirksame Position in eine nichtwirksame Position bewegt wird.

3. Gerät nach Anspruch 2, bei dem die Feder einen Federarm (30*b*) aufweist, der in der wirksamen Position der Andruckrolle (1) auf den Betriebsart-Änderungshebel (21) längs einer Kraftlinie, die sich durch die Achse erstreckt, um welche der Betriebsart-Änderungshebel (21) winkelmäßig auslenkbar ist, einwirkt, so daß der Federarm (30*b*) dann den Betriebsart-Änderungshebel (21) nur in der einen Richtung längs des länglichen Lochs (26) drückt, und der Federarm (30*b*) in der nichtwirksamen Position des Betriebsart-Änderungshebels (21) auf diesen längs einer Kraftlinie, die von der Achse versetzt ist, einwirkt, um den Betriebsart-Änderungshebel (21) auch winkelmäßig um die Achse auszulenken.

4. Gerät nach Anspruch 3, bei dem das Betriebsart-Änderungsantriebsmittel (37) ein drehbares Nockenteil, das innere und äußere Nockenoberflächen (40*a*, 41*a*) hat, die alternativ mit einem Nockenfolgerteil (27) des Betriebsart-Änderungshebels (21), das sich zwischen diesen erstreckt, in Eingriff treten können, und eine Antriebsnase (42) zwischen den Nockenoberflächen (40*a*, 41*a*), die mit dem Nockenfolgerteil (27) des Betriebsart-Änderungshebels (21) in der entgegengesetzten Richtung in Eingriff treten kann, wenn weder der Federarm (30*b*) noch das Drehteil (1) den Betriebsart-Änderungshebel (21) winkelmäßig um die Achse auslenkt, enthält und bei dem in der nichtwirksamen Position des Betriebsart-Änderungshebels (21) der Federarm (30*b*) den Betriebsart-Änderungshebel (21) winkelmäßig um die Achse in der Richtung auslenkt, die das Nockenfolgerteil (27) gegen die äußere Nockenoberfläche (41*a*) drückt, und wenn die Andruckrolle (1) in ihrer wirksamen Position gedreht wird, der Betätigungsabschnitt (23) den Betriebsart-Änderungshebel (21) winkelmäßig um die Achse in der Richtung auslenkt, die das Nockenfolgerteil (27) gegen die innere Nockenoberfläche (40*a*) drückt.

5. Gerät nach Anspruch 4, bei dem der Betriebsart-Änderungshebel (21) einen Endabschnitt aufweist, der abseitsliegend von dem Nockenfolgerteil (27) vorgesehen ist und mit einer Nut (31) ausgebildet ist, die den Federarm (30*b*) aufnimmt, wobei die Nut (31) einen bogenförmigen Abschnitt (33) aufweist, der im wesentlichen konzentrisch mit der Achse verläuft, wenn der Betätigungsabschnitt (23) unter Reibung in die Seiten des länglichen Lochs (26) eingreift, und der tangential mit dem Federarm (30*b*) in Eingriff steht, wenn sich die Andruckrolle (1) in ihrer wirksamen Position befindet, und wobei die Nut (31) desweiteren einen geraden Endabschnitt (34) aufweist, der unter einem Winkel mit dem Federarm (30b) in Eingriff steht, wenn sich die Andruckrolle (1) in der nichtwirksamen Position befindet.

## Revendications

1. Appareil d'enregistrement et/ou de lecture de bande en cassette ayant un organe (9) d'entraînement de bande magnétique qui, dans un mode choisi de fonctionnement de l'appareil, est entraîné en rotation de manière qu'il entraîne la bande (8) de la cassette dans le sens d'enroulement de la bande (8) sur une bobine réceptrice, et ayant un dispositif (20) destiné à changer automatiquement le mode de fonctionnement de l'appareil lorsque la bande (8) est totalement enroulée sur la bobine réceptrice, le dispositif (20) comprenant:

un organe rotatif (1) entraîné en rotation lorsque la bande (8) se déplace et qui cesse de tourner lorsque la bande (8) est totalement enroulée sur la bobine réceptrice, l'organe rotatif (1) ayant une partie cylindrique (23) de manoeuvre qui peut tourner coaxialement avec lui,

un dispositif (37) d'entraînement de changement de mode destiné à se déplacer de manière répétée en fonction de la rotation de l'organe (9) d'entraînement de bande et destiné fonctionner uniquement lorsque l'organe rotatif (1) cesse de tourner,

un levier (21) de changement de mode qui peut tourner, et

un dispositif (11) destiné à établir un autre mode de fonctionnement de l'appareil,

caractérisé en ce que:

le levier (21) de changement de mode a un trou allongé (26) ayant des côtés convergents, la partie cylindrique (23) de manoeuvre étant logée dans ce trou de manière que le levier (21) de changement de mode puisse être déplacé angulairement autour de l'axe de rotation de l'organe rotatif (1) et puisse aussi être déplacé longitudinalement suivant la longueur du trou allongé (26),

un dispositif (30) à ressort repousse le levier (21) de changement de mode dans un sens le long du trou allongé (26) afin qu'il fasse coopérer par friction les côtés convergents avec la partie (23) de manoeuvre et provoque ainsi la coopération par friction du levier (21) de changement de mode avec l'organe rotatif (1) afin qu'il tourne avec ce dernier tant que l'organe rotatif (1) tourne, et

le dispositif (11) destiné à établir un autre mode de fonctionnement de l'appareil, lorsqu'il est commandé par la manoeuvre du dispositif (7) d'entraînement de changement de mode, assure le déplacement du levier (21) de changement de mode dans l'autre sens, le long du trou allongé (26) malgré la force exercée par le dispositif à ressort (30) uniquement lorsque l'organe rotatif (1) cesse de tourner et ne provoque donc plus la coopération par friction du levier (21) de changement de mode afin qu'il tourne autour de l'axe.

2. Appareil selon la revendication 1, dans lequel l'organe d'entraînement de bande est un cabestan (9) entraîné par un moteur, l'organe rotatif est un galet (1) de pincement destiné à se déplacer entre des positions de travail et de repos par rapport au cabestan (9), et le levier (21) de changement de mode est déplacé vers une position de repos à la suite du déplacement du galet de pincement (1) vers sa position de repos.

3. Appareil selon la revendication 2, dans lequel le dispositif à ressort comprend un bras (30b) de ressort qui, dans la position de travail du galet (1) de pincement, agit sur le levier (21) de changement de mode suivant une direction d'application de force passant par l'axe autour duquel le levier (21) de changement de mode peut se déplacer angulairement si bien que le bras (30b) de ressort repousse le levier (21) de changement de mode uniquement dans le premier sens le long du trou allongé (26) et, dans la position de repos du levier (21) de changement de mode, le bras (30b) de ressort agit suivant une direction décalée par rapport à l'axe et repousse aussi le levier (21) de changement de mode angulairement autour de l'axe.

4. Appareil selon la revendication 3, dans lequel le dispositif (37) d'entraînement de changement de mode comprend un organe rotatif à came ayant des surfaces interne et externe de came (40a, 41a) destinées à coopérer en alternance avec une partie (27) formant toucheau de came et appartenant au levier (21) de changement de mode, cette partie, étant placée entre les surfaces, et une saillie (42) entraînement placée entre les surfaces de came (40a, 41a) et destinée à coopérer avec la partie (27) de toucheau de came du levier (21) dans l'autre sens lorsque ni le bras (30b) de ressort ni l'organe rotatif (1) ne repoussent angulairement le levier (21) de changement de mode autour de l'axe, et dans lequel, dans la position de repos du levier (21) de changement de mode, le bras (30b) de ressort repousse angulairement le levier (21) de changement de mode autour de l'axe, dans un sens qui provoque l'application de la partie (27) formant toucheau de came contre la surface (41a) de came externe et, lorsque le galet (1) de pincement tourne dans sa position de travail, la partie (23) de manoeuvre repousse par friction le levier (21) de changement de mode angulairement autour de l'axe dans le sens qui applique la partie (27) formant toucheau de came contre la surface de came interne (40a).

5. Appareil selon la revendication 4, dans lequel le levier (21) de changement de mode a une partie d'extrémité distante de la partie (27) formant toucheau de came et ayant une gorge (31) qui loge le bras (30b) de ressort, la gorge (31) ayant une partie courbe (33) sensiblement concentrique à l'axe lorsque la partie de manoeuvre (23) coopère par friction avec les côtés du trou allongé (26) et qui coopère tangentiellement avec le bras (30b) de ressort lorsque le galet (1) de pincement est dans la position de travail, la gorge (31) ayant en outre une partie rectiligne d'extrémité (34) coopérant de façon inclinée avec le bras (30b) de ressort lorsque le galet (1) de pincement est dans sa position de repos.

# FIG.1

FIG.2

# FIG.3

FIG.4

0 133 013

4

# FIG.5

# FIG.6

**FIG.7A**

**FIG.7B**

# FIG.7C

# FIG.7D

# FIG.7E

# FIG.8A

# FIG.8B